# DEMANDE DE BREVET EUROPEEN

(11) **EP 4 333 551 A1**
(43) Date de publication de la demande: **06.03.2024**
(21) Numéro de dépôt: 23192976.1
(22) Date de dépôt: 23.08.2023
(51) Int. Cl.: H04W 84/02, H04W 84/12, H04W 84/18, H04W 36/18

(54) **PROCEDE ET DISPOSITIF DE SELECTION D'UN NOEUD DANS UN RESEAU LOCAL**

(30) Priorité: 01.09.2022 FR 2208773
(71) Demandeur: SAGEMCOM BROADBAND SAS, 92500 Rueil-Malmaison (FR)
(72) Inventeur: LE ROUX, Sylvain, 92500 RUEIL MALMAISON (FR)
(74) Mandataire: Cabinet Le Guen Maillet

(57) **Abrégé**

La présente invention concerne un procédé et un dispositif de reconfiguration d'une première interconnexion d'un premier noeud avec un second noeud d'un sous réseau d'acheminement dans un réseau local comprenant une pluralité de noeuds les premier et second noeuds étant interconnectés par une liaison radio dans une première bande de fréquence. Selon l'invention, un noeud dit contrôleur :
- sélectionne (E320) un troisième noeud du réseau local, le troisième noeud étant différent du premier et du second noeuds,
- établit (E321) une seconde interconnexion entre le premier et le troisième noeuds par une liaison radio dans une seconde bande de fréquence différente de la première bande de fréquence,
- supprime (S423) la première interconnexion lorsque la seconde interconnexion est établie.

## Description

### DOMAINE TECHNIQUE

La présente invention concerne un procédé et un dispositif de reconfiguration d'un réseau local comprenant des noeuds permettant une extension de couverture de communication sans-fil afin d'augmenter la portée du réseau local en coordonnant plusieurs points d'accès intégrés aux noeuds.

### ETAT DE LA TECHNIQUE ANTERIEURE

Dans les réseaux locaux LAN (« Local Area Network » en anglais), des systèmes d'extension de couverture de communication sans-fil peuvent être utilisés afin d'augmenter la portée de ces réseaux locaux LAN en coordonnant plusieurs points d'accès AP (« Access Point » en anglais) répartis. Ces différents points d'accès AP sont intégrés à des noeuds de communication, appelés simplement ci-après noeuds, interconnectés grâce à un sous-réseau d'acheminement ou d'amenée (« backhaul subnetwork » en anglais) et mettent tous à disposition un même réseau local sans-fil WLAN (« Wireless Local Area Network ») en anglais.

Les noeuds du sous-réseau d'acheminement sont connectés les uns aux autres grâce à une structure maillée en forme d'arbre, un noeud pouvant alors servir de relais entre deux autres noeuds du sous-réseau d'acheminement. Les noeuds du sous-réseau d'acheminement sont ainsi interconnectés grâce à des liaisons filaires, par exemple de type Ethernet, ou à des liaisons sans-fil. Les noeuds du sous-réseau d'acheminement sont connectés entre eux par un réseau qu'on appelle aussi « Réseau BackHaul » pouvant être soit filaire, soit sans-fil, ou une combinaison des deux.

Chaque noeud du sous-réseau d'acheminement émet éventuellement au moins un réseau sans-fil qu'on appelle « Réseau FrontHaul » ou réseau frontal sur lequel se connectent les stations de l'utilisateur. Ce réseau frontal, s'il utilise la technologie Wi-Fi / IEEE 802.11, est l'équivalent de ce qui se nomme BSS (Basic Service Set).

Au moins un des noeuds du sous-réseau d'acheminement est connecté à une passerelle résidentielle « gateway en anglais » qui fournit l'accès au réseau Internet. La passerelle résidentielle peut aussi faire partir du sous-réseau d'acheminement.

Dans le cadre des noeuds du sous-réseau d'acheminement couplés ou non à une passerelle résidentielle, le choix de la bande de fréquence servant au sous réseau d'acheminement se résumait autrefois à la bande de fréquence 2.4 GHz (limitée en termes de débit, très congestionnée) et à la bande 5 GHz permettant des débits plus importants. De fait, la bande 5 GHz était souvent privilégiée pour le choix du sous-réseau d'acheminement. Cette fonctionnalité de sous-réseau d'acheminement est assurée par une interface radio dédiée ou non.

Chaque radio d'un noeud du sous réseau d'acheminement possède une partie client (station) qui vient s'associer à un point d'accès d'un autre noeud du sous réseau d'acheminement. Ce point d'accès peut être dédié à la fonctionnalité du sous réseau d'acheminement ou être le même que celui dédié au réseau frontal.

Aujourd'hui la plupart des solutions n'utilisent qu'une seule bande pour le sous réseau d'acheminement. Ce choix contraint évidemment le canal à être le même pour toutes les radios des équipements utilisés pour la fonction de sous réseau d'acheminement. L'ouverture de la bande 6 GHz aux technologies Wi-Fi permet dorénavant d'avoir deux bandes de fréquence supportant des transmissions haut débit (5 GHz et 6 GHz) et donc candidates à la fonction de sous réseau d'acheminement.

La topologie en forme d'arbre introduit une latence dans la transmission des données et il est parfois nécessaire de reconfigurer le sous réseau d'acheminement. Lors de la reconfiguration du réseau d'acheminement, des connexions WiFi entre les noeuds du sous réseau d'acheminement sont supprimées et d'autres sont ajoutées. Pendant la reconfiguration, les stations de l'utilisateur du réseau frontal qui sont connectées aux noeuds impliqués dans la reconfiguration du sous réseau d'acheminement peuvent subir temporairement des pertes de connexions.

La présente invention proposée permet de garantir que les stations qui sont connectées aux noeuds impliqués dans la reconfiguration du sous réseau d'acheminement ne subissent aucune perte de connexion.

### EXPOSE DE L'INVENTION

A cette fin, selon un premier aspect, un mode de réalisation propose un procédé de reconfiguration d'une première interconnexion d'un premier noeud avec un second noeud d'un sous réseau d'acheminement dans un réseau local comprenant une pluralité de noeuds permettant une extension de couverture de communication sans-fil afin d'augmenter la portée du réseau local en coordonnant plusieurs points d'accès intégrés aux noeuds, les premier et second noeuds étant interconnectés par une liaison radio dans une première bande de fréquence, caractérisé en ce que le procédé comporte les étapes, exécutées par un noeud dit contrôleur, de :
- sélection d'un troisième noeud du réseau local, le troisième noeud étant différent du premier et du second noeuds,
- établissement d'une seconde interconnexion entre le premier et le troisième noeuds par une liaison radio dans une seconde bande de fréquence différente de la première bande de fréquence,
- suppression de la première interconnexion lorsque la seconde interconnexion est établie. Un mode de réalisation concerne aussi un dispositif de reconfiguration d'une première interconnexion d'un premier noeud avec un second noeud d'un sous réseau d'acheminement dans un réseau local comprenant une pluralité de noeuds permettant une extension de couverture de communication sans-fil afin d'augmenter la portée du réseau local en coordonnant plusieurs points d'accès intégrés aux noeuds, les premier et second noeuds étant interconnectés par une liaison radio dans une première bande de fréquence, caractérisé en ce que le dispositif est compris dans un noeud dit contrôleur, et comporte :
- des moyens de sélection d'un troisième noeud du réseau local, le troisième noeud étant différent du premier et du second noeuds,
- des moyens d'établissement d'une seconde interconnexion entre le premier et le troisième noeuds par une liaison radio dans une seconde bande de fréquence différente de la première bande de fréquence,
- des moyens de suppression de la première interconnexion lorsque la seconde interconnexion est établie.

Selon un mode de réalisation particulier, les noeuds du sous-réseau d'acheminement sont connectés les uns aux autres grâce à une structure maillée en forme d'arbre, le premier noeud servant de relais entre un noeud de niveau hiérarchique supérieur dans l'arbre et un noeud de niveau hiérarchique inférieur dans l'arbre et le troisième noeud n'est pas un noeud de niveau hiérarchique inférieur pour lequel le premier noeud sert de relai.

Selon un mode de réalisation particulier, les noeuds du sous-réseau d'acheminement sont connectés les uns aux autres grâce à une structure maillée et le procédé comporte en outre les étapes de :
- vérification si l'établissement de la seconde interconnexion crée deux chemins pour le transfert de données entre deux noeuds du réseau maillé, et dans l'affirmative
- interruption du transfert de données entre les deux noeuds du réseau maillé sur un des deux chemins.

Selon un mode de réalisation particulier, le procédé comporte en outre les étapes de :
- sélection d'un quatrième noeud du réseau local, le quatrième noeud étant différent du second noeud,
- établissement, lorsque la première interconnexion est supprimée, d'une troisième interconnexion entre le premier et le quatrième noeuds par une liaison radio dans la première bande de fréquence.

Selon un mode de réalisation particulier, le procédé comporte en outre l'étape de suppression de la seconde interconnexion lorsque la troisième interconnexion est établie. Selon un mode de réalisation particulier, les noeuds du sous-réseau d'acheminement sont connectés les uns aux autres grâce à une structure maillée en forme d'arbre, le troisième noeud servant de relais entre au moins un noeud de niveau hiérarchique supérieur dans l'arbre et au moins un noeud de niveau hiérarchique inférieur dans l'arbre et le quatrième noeud n'est pas un noeud de niveau hiérarchique inférieur pour lequel le troisième noeud sert de relai.

Selon un mode de réalisation particulier, les noeuds du sous-réseau d'acheminement sont connectés les uns aux autres grâce à une structure maillée et le procédé comporte en outre les étapes de :
- vérification si l'établissement de la troisième interconnexion crée deux chemins pour le transfert de données entre deux noeuds du réseau maillé, et dans l'affirmative
- interruption du transfert de données entre les deux noeuds du réseau maillé sur un des deux chemins.

Un mode particulier concerne aussi un produit programme d'ordinateur. Il comprend des instructions pour implémenter, par un équipement, le procédé selon l'un des modes de réalisation précédents, lorsque ledit programme est exécuté par un processeur de l'équipement.

Un mode particulier concerne aussi un support de stockage. Il stocke un programme d'ordinateur comprenant des instructions pour implémenter, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un exemple de réseau local dans un mode de réalisation ;
[Fig. 2] illustre schématiquement l'architecture d'un noeud selon un mode de réalisation ;
[Fig. 3a] illustre un exemple d'un procédé exécuté selon un premier mode de réalisation ;
[Fig. 3b] illustre un exemple d'un procédé exécuté selon un second mode de réalisation ;
[Fig. 3c] illustre un exemple d'un procédé exécuté selon un troisième mode de réalisation ;
[Fig. 4a], [Fig. 4b], [Fig. 4c] et [Fig. 4d] illustrent un exemple de reconfiguration d'un réseau local comprenant des noeuds permettant une extension de couverture de communication sans-fil selon le premier mode de réalisation ;
[Fig. 5a], [Fig. 5b], [Fig. 5c] et [Fig. 5d] illustrent un exemple de reconfiguration d'un réseau local comprenant des noeuds permettant une extension de couverture de communication sans-fil selon le second mode de réalisation ;
[Fig. 6a] et [Fig. 6b] illustrent un exemple de reconfiguration d'un réseau local comprenant des noeuds permettant une extension de couverture de communication sans-fil selon le troisième mode de réalisation ;
[Fig. 7] illustre schématiquement différents éléments d'un noeud selon un mode de réalisation.

### EXPOSE DETAILLE DE MODES DE REALISATION

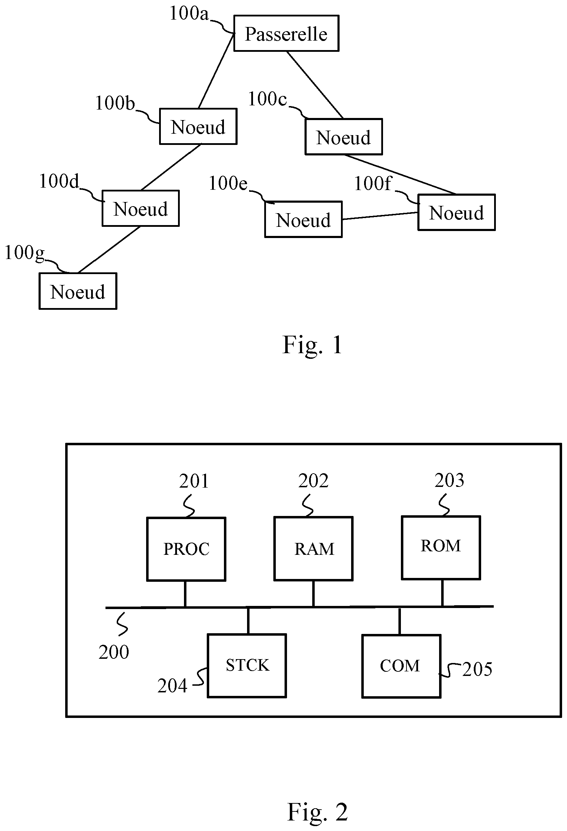

La Fig. 1 illustre un exemple de réseau local dans un mode de réalisation.

Le réseau local maillé est construit autour d'un sous-réseau d'acheminement comportant un ensemble de noeuds 100a à 100g interconnectés.

Le noeud 100a est par exemple une passerelle résidentielle « gateway en anglais » qui fournit l'accès à un réseau étendu, comme par exemple le réseau Internet.

Les noeuds 100b à 100g sont des systèmes d'extension de couverture de communication sans-fil qui sont utilisés afin d'augmenter la portée du réseau local en coordonnant plusieurs points d'accès AP (« Access Point » en anglais) répartis. Ces différents points d'accès AP sont intégrés aux noeuds qui sont interconnectés grâce à un sous-réseau d'acheminement ou d'amenée (« backhaul subnetwork » en anglais) et mettent tous à disposition un même réseau local sans-fil WLAN en anglais. Dans un exemple, certains ou la totalité des noeuds 100b à 100g sont des « extenders » de couverture sans-fil.

Le noeud 100a peut être compris dans le sous réseau d'acheminement.

Les noeuds 100a à 100g du sous-réseau d'acheminement sont connectés les uns aux autres grâce à une structure maillée en forme d'arbre, un noeud pouvant alors servir de relais entre deux autres noeuds du sous-réseau d'acheminement. Les noeuds du sous-réseau d'acheminement sont par exemple interconnectés grâce à des liaisons sans-fil.

Chaque noeud du sous-réseau d'acheminement émet au moins un réseau sans-fil qu'on appelle « Réseau FrontHaul » ou réseau frontal sur lequel se connectent les stations de l'utilisateur. Ce réseau frontal, s'il utilise la technologie Wi-Fi / IEEE 802.11, est l'équivalent de ce qui se nomme BSS (Basic Service Set).

Dans l'exemple de la Fig. 1, le noeud 100a est connecté aux noeuds 100b et 100c, le noeud 100b est interconnecté au noeud 100d, le noeud 100d est connecté au noeud 100g, le noeud 100c est connecté au noeud 100f, le noeud 100f est connecté au noeud 100e.

Au moins une partie des noeuds 100a à 100g du sous-réseau d'acheminement comprend une pluralité d'interfaces radio.

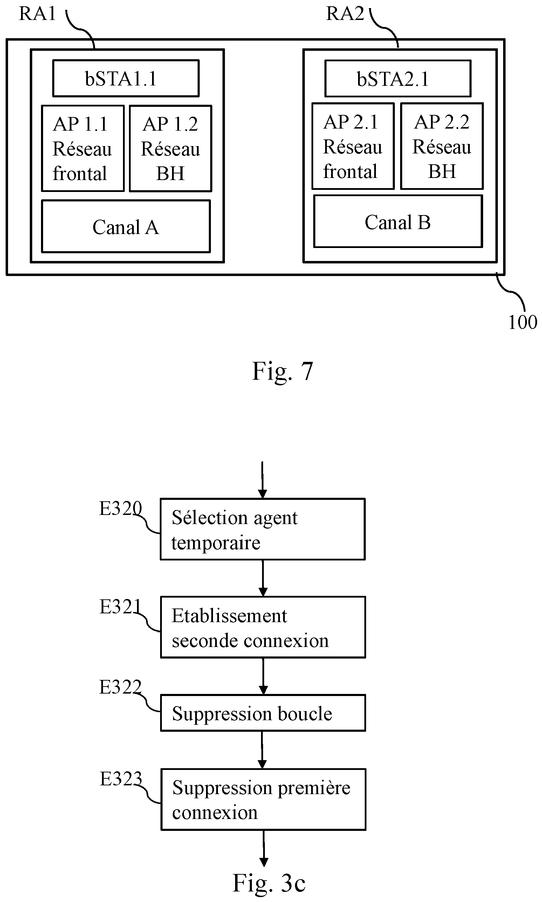

Les éléments d'un noeud sont décrits plus en détail en référence à la Fig.7.

La Fig.7 illustre schématiquement différents éléments d'un noeud 100 selon un mode de réalisation.

Au moins une partie des noeuds 100a à 100g du sous-réseau d'acheminement comprend :
- une interface radio RA1 fonctionnant sur une première bande de fréquence par exemple la bande de fréquence 5GHz,
- une interface radio RA2 fonctionnant sur une seconde bande de fréquence par exemple la bande de fréquence 6 GHz,

La première interface radio RA1 comprend :
- une interface client bST A1.1 du sous-réseau d'acheminement,
- une interface point d'accès AP1.2 du sous-réseau d'acheminement, l'interface point d'accès AP1.2 étant dédiée à l'association d'interface client d'autres noeuds du réseau d'acheminement (Réseau Backhaul),
- optionnellement une interface point d'accès AP 1.1 correspondant à une interface point d'accès du réseau local utilisateur, cette interface étant dédiée à l'association de stations ou de terminaux (Réseau frontal),
- un canal radio noté A pour l'émission et la réception dans la bande de fréquence de la radio RA1.

La seconde interface radio RA2 comprend :
- une interface client bSTA2.1 du sous-réseau d'acheminement,
- une interface point d'accès AP2.2 du sous-réseau d'acheminement, l'interface point d'accès AP2.2 étant dédiée à l'association d'interface client d'autres noeuds du réseau d'acheminement (Réseau Backhaul),
- optionnellement une interface point d'accès AP2.1 correspondant à une interface point d'accès du réseau local utilisateur, cette interface étant dédiée à l'association de stations ou terminaux (Réseau frontal),
- un canal radio noté B pour l'émission et la réception dans la bande de fréquence de la radio RA2.

Il est à remarquer ici que seulement deux canaux radio sont représentés par soucis de simplification. Bien entendu, les noeuds peuvent comporter un nombre plus important de canaux radio.

Il est entendu ci-après par le terme « noeud », un équipement offrant des capacités de connectivité et constitutif du réseau local maillé.

Il est entendu ci-après par le terme « station », un équipement fixe ou mobile utilisant les ressources du réseau local maillé via l'intermédiaire des noeuds dudit réseau local. Une station est par exemple un terminal mobile sans-fil, une enceinte sans-fil.

Dans différents exemples, les équipements, noeuds ou stations, sont respectivement chacun compatibles avec l'une ou plusieurs normes de la famille des standards IEEE 802.11.

Une radio peut héberger plusieurs interfaces points d'accès, chaque interface point d'accès AP ayant ses propres paramètres de connexion (e.g. une interface point d'accès pour un réseau privé, un réseau public, un réseau vidéo ...).

Chaque nouveau noeud ou station qui recherche un point d'accès auquel s'associer peut, avant association, choisir le point d'accès optimal dans la topologie du réseau. Chaque nouveau noeud ou station pourra également décider si les conditions de propagation (par exemple en se basant sur un indicateur de la puissance reçue (« Received Signal Strength Indicator (RSSI) » en anglais) entre les divers points d'accès possibles sont équivalentes, et privilégier une interface radio ne servant pas au sous réseau d'acheminement.

Les stations sont par exemple des téléphones intelligents (« smartphone » en anglais) ou une tablette, un ordinateur, une télévision, une unité de stockage en réseau NAS (« Network Attached Storage » en anglais).

La **Fig. 2** illustre schématiquement l'architecture d'un noeud selon un mode de réalisation. Selon l'exemple d'architecture matérielle représenté à la Fig. 2, au moins les noeuds 100b, 100d et 100e, comprennent, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; au moins une interface de communication 205 permettant au noeud de communiquer avec les équipements du réseau local.

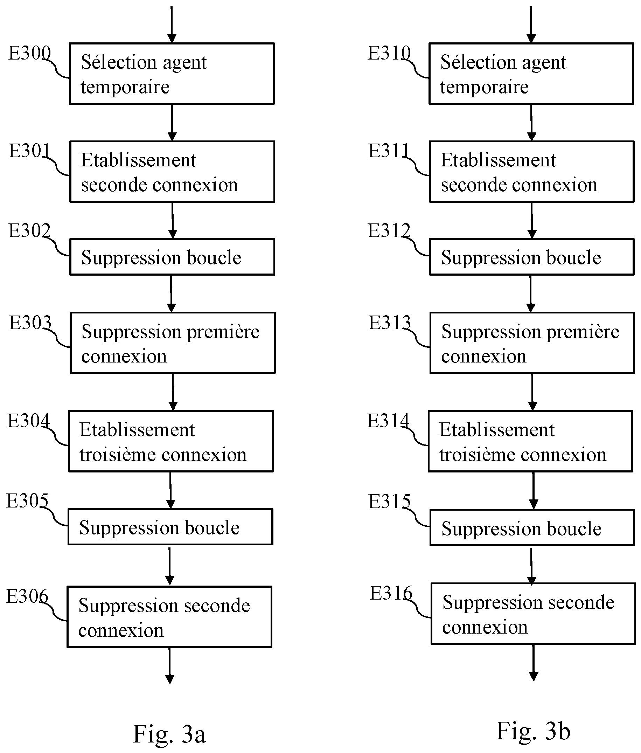

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le noeud est mis sous tension, le processeur 201 est capable de lire de la RAM 202 des instructions et de les exécuter. Ces instructions forment un programme d'ordinateur causant la mise en oeuvre, par le processeur 201, de tout ou partie du procédé décrit en relation avec les Figs. 3.

Le procédé décrit ci-après en relation avec les Figs. 3 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le noeud comprend de la circuiterie électronique configurée pour mettre en oeuvre les procédés décrits en relation avec les Figs. 3.

La **Fig. 3a** illustre un exemple d'un procédé exécuté selon un premier mode de réalisation. Le présent algorithme est exécuté par un noeud appelé contrôleur du sous réseau d'acheminement.

Le présent algorithme est par exemple exécuté lorsqu'une reconfiguration d'un réseau local doit être effectuée.

Selon le premier mode de réalisation, l'interconnexion entre un premier noeud 100e et un second noeud 100f doit être remplacée par une interconnexion entre le premier noeud 100e avec un quatrième noeud 100b en utilisant de manière temporaire un troisième noeud 100d. Le contrôleur est par exemple compris dans le noeud 100a.

A l'étape E300, le contrôleur sélectionne un noeud temporaire, par exemple le noeud 100d. Les noeuds du sous-réseau d'acheminement sont connectés les uns aux autres grâce à une structure maillée en forme d'arbre, le premier noeud sert de relais entre des noeuds de niveau hiérarchique supérieur dans l'arbre et des noeuds de niveau hiérarchique inférieur dans l'arbre et le troisième et le quatrième noeuds sont différents des noeuds de niveau hiérarchique inférieur pour lesquels le premier noeud sert de relai.

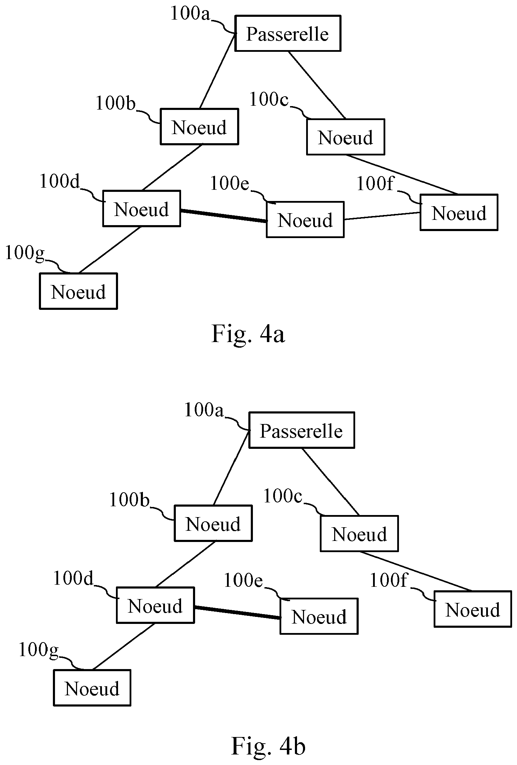

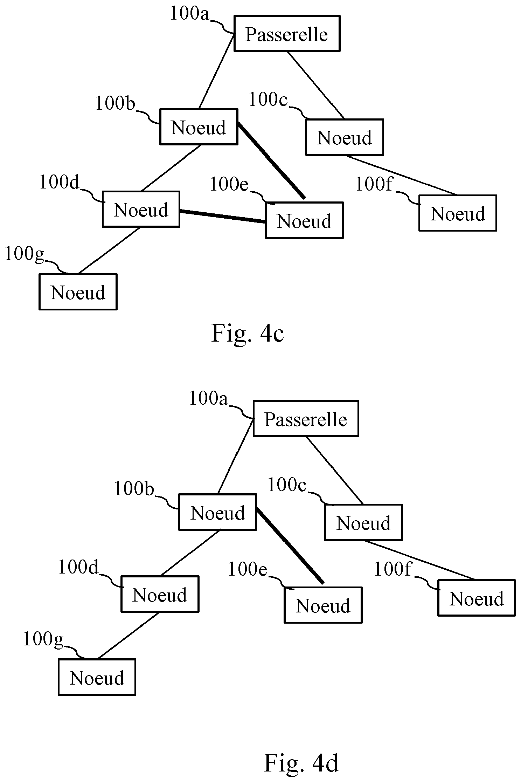

A l'étape E301, le contrôleur commande l'établissement d'une seconde interconnexion entre le premier et le troisième noeuds par une liaison radio dans une seconde bande de fréquence différente de la première bande de fréquence. Un exemple de l'établissement d'une seconde interconnexion entre le premier et le troisième noeuds est donné en Fig. 4a. A l'étape E302, le contrôleur vérifie si l'établissement de la seconde interconnexion crée deux chemins pour le transfert de données entre deux noeuds du réseau maillé formant une boucle et dans l'affirmative commande l'interruption au niveau logique du transfert de données entre les deux noeuds du réseau maillé sur un des deux chemins. Il est à remarquer ici qu'aucun des deux chemins physiques n'est supprimé.

A l'étape E303, le contrôleur commande la suppression de la première interconnexion lorsque la seconde interconnexion est établie. Un exemple de la suppression de la première interconnexion entre le premier et le second noeuds est donné en Fig. 4b.

A l'étape E304, le contrôleur commande l'établissement, lorsque la première interconnexion est supprimée, d'une troisième interconnexion entre le premier et le quatrième noeuds par une liaison radio dans la première bande de fréquence. Un exemple de l'établissement d'une seconde interconnexion entre le premier et le troisième noeuds est donné en Fig. 4c.

A l'étape E305, le contrôleur vérifie si l'établissement de la seconde interconnexion crée deux chemins pour le transfert de données entre deux noeuds du réseau maillé, et dans l'affirmative commande l'interruption du transfert de données entre les deux noeuds du réseau maillé sur un des deux chemins.

A l'étape E306, le contrôleur commande la suppression de la seconde interconnexion lorsque la troisième interconnexion est établie. Un exemple de l'établissement d'une seconde interconnexion entre le premier et le troisième noeuds est donné en Fig. 4c.

La **Fig. 3b** illustre un exemple d'un procédé exécuté selon un second mode de réalisation. Le présent algorithme est exécuté par un noeud appelé contrôleur du sous réseau d'acheminement.

Le présent algorithme est par exemple exécuté lorsqu'une reconfiguration d'un réseau local doit être effectuée.

Selon le second mode de réalisation, l'interconnexion entre le premier noeud 100e et le second noeud 100f doit être remplacée par une interconnexion entre le premier noeud 100e avec le quatrième noeud 100b en utilisant de manière temporaire un autre canal radio du quatrième noeud. Le quatrième noeud est appelé par la suite troisième noeud 100b.

Le contrôleur est par exemple compris dans le noeud 100a.

A l'étape E310, le contrôleur sélectionne un noeud temporaire, par exemple le troisième noeud 100b.

Les noeuds du sous-réseau d'acheminement sont connectés les uns aux autres grâce à une structure maillée en forme d'arbre, le premier noeud sert de relais entre des noeuds de niveau hiérarchique supérieur dans l'arbre et des noeuds de niveau hiérarchique inférieur dans l'arbre et le troisième et le quatrième noeuds sont différents des noeuds de niveau hiérarchique inférieur pour lesquels le premier noeud sert de relai.

Dans un réseau maillé en forme d'arbre, un groupe ou une branche de noeuds peut être défini lorsque ces noeuds sont reliés par un backhaul sans-fil, et que l'un des noeuds du groupe est connecté à un autre groupe via un réseau backhaul Ethernet. Dans un même groupe de noeuds, le réseau backhaul sans-fil utilise le même canal pour toutes les interconnexions entre les noeuds du groupe.

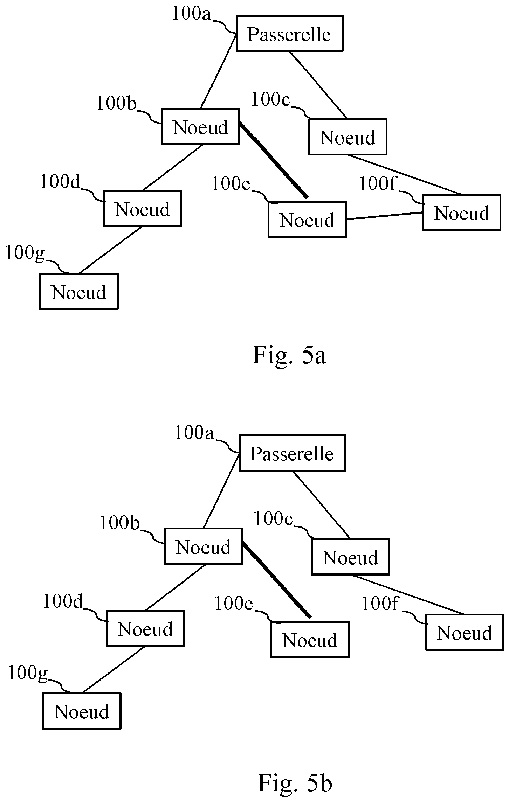

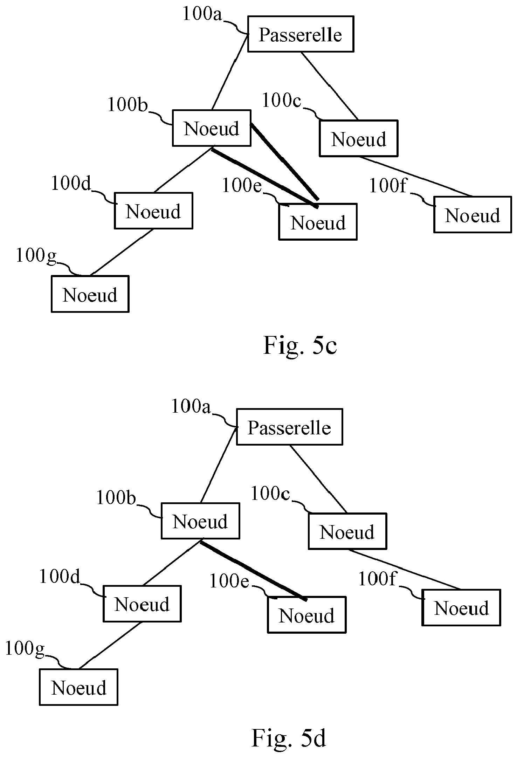

A l'étape E311, le contrôleur commande l'établissement d'une seconde interconnexion entre le premier et le troisième noeuds par une liaison radio dans une seconde bande de fréquence différente de la première bande de fréquence. Un exemple de l'établissement d'une seconde interconnexion entre le premier et le troisième noeuds est donné en Fig. 5a. A l'étape E312, le contrôleur vérifie si l'établissement de la seconde interconnexion crée deux chemins pour le transfert de données entre deux noeuds du réseau maillé formant une boucle et dans l'affirmative commande l'interruption au niveau logique du transfert de données entre les deux noeuds du réseau maillé sur un des deux chemins. Il est à remarquer ici qu'aucun des deux chemins physiques n'est supprimé.

A l'étape E313, le contrôleur commande la suppression de la première interconnexion lorsque la seconde interconnexion est établie. Un exemple de la suppression de la première interconnexion entre le premier et le second noeuds est donné en Fig. 5b.

A l'étape E314, le contrôleur commande l'établissement, lorsque la première interconnexion est supprimée, d'une troisième interconnexion entre le premier et le quatrième noeuds par une liaison radio dans la première bande de fréquence. Un exemple de l'établissement d'une seconde interconnexion entre le premier et le troisième noeuds est donné en Fig. 5c.

A l'étape E315, le contrôleur vérifie si l'établissement de la seconde interconnexion crée deux chemins pour le transfert de données entre deux noeuds du réseau maillé, et dans l'affirmative commande l'interruption du transfert de données entre les deux noeuds du réseau maillé sur un des deux chemins.

A l'étape E316, le contrôleur commande la suppression de la seconde interconnexion lorsque la troisième interconnexion est établie. Un exemple de l'établissement d'une seconde interconnexion entre le premier et le troisième noeuds est donné en Fig. 5c.

En variante l'étape E316 n'est pas exécutée.

Il est à remarquer qu'en variante, l'interconnexion entre le premier noeud 100e avec le quatrième noeud 100b est effectuée en utilisant de manière temporaire un autre canal radio du premier noeud. Le premier noeud est alors appelé troisième noeud 100b.

La **Fig. 3c** illustre un exemple d'un procédé exécuté selon un troisième mode de réalisation.

Le présent algorithme est exécuté par un noeud appelé contrôleur du sous réseau d'acheminement.

Le présent algorithme est par exemple exécuté lorsqu'une reconfiguration d'un réseau local doit être effectuée.

Selon le troisième mode de réalisation, l'interconnexion entre le premier noeud 100e et le second noeud 100f doit être remplacée par une interconnexion entre le premier noeud 100e avec le quatrième noeud 100b.

Le contrôleur est par exemple compris dans le noeud 100a.

A l'étape E320, le contrôleur sélectionne un noeud temporaire, par exemple le troisième noeud 100b.

Les noeuds du sous-réseau d'acheminement sont connectés les uns aux autres grâce à une structure maillée en forme d'arbre, si le premier noeud sert de relais entre des noeuds de niveau hiérarchique supérieur dans l'arbre et des noeuds de niveau hiérarchique inférieur dans l'arbre et le troisième noeud est différent des noeuds de niveau hiérarchique inférieur pour lesquels le premier noeud sert de relai.

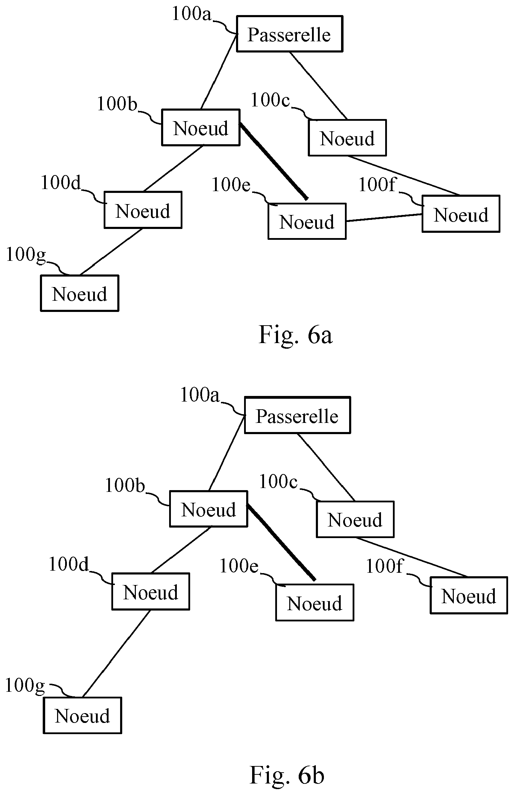

A l'étape E321, le contrôleur commande l'établissement d'une seconde interconnexion entre le premier et le troisième noeuds par une liaison radio dans une seconde bande de fréquence différente de la première bande de fréquence. Un exemple de l'établissement d'une seconde interconnexion entre le premier et le troisième noeuds est donné en Fig. 6a. A l'étape E322, le contrôleur vérifie si l'établissement de la seconde interconnexion crée deux chemins pour le transfert de données entre deux noeuds du réseau maillé formant une boucle et dans l'affirmative commande l'interruption eu niveau logique du transfert de données entre les deux noeuds du réseau maillé sur un des deux chemins. Il est à remarquer ici qu'aucun des deux chemins physiques n'est supprimé.

A l'étape E323, le contrôleur commande la suppression de la première interconnexion lorsque la seconde interconnexion est établie. Un exemple de la suppression de la première interconnexion entre le premier et le second noeuds est donné en Fig. 6b.

Dans d'autres modes de réalisation, le contrôleur du sous-réseau d'acheminement est compris dans l'un des noeuds de la structure maillée en forme d'arbre. Par exemple, lorsque l'interconnexion entre le noeud 100e et le noeud 100f est reconfigurée en une interconnexion entre le noeud 100e et le noeud 100b, le contrôleur peut être compris dans ledit noeud 100b ou le noeud 100c.

Dans d'autres modes de réalisation, le contrôleur du sous-réseau d'acheminement est une fonction offerte par un équipement externe à la structure maillée. Par exemple cet équipement externe coopère avec le noeud 100a connecté au réseau étendu afin de permettre de reconfigurer les interconnexions entre les noeuds.

## Revendications

1. Procédé de reconfiguration d'une première interconnexion d'un premier noeud avec un second noeud d'un sous réseau d'acheminement dans un réseau local comprenant une pluralité de noeuds permettant une extension de couverture de communication sans-fil afin d'augmenter la portée du réseau local en coordonnant plusieurs points d'accès intégrés aux noeuds, les premier et second noeuds étant interconnectés par une liaison radio dans une première bande de fréquence, **caractérisé en ce que** le procédé comporte les étapes, exécutées par un noeud dit contrôleur, de :
- sélection (E320) d'un troisième noeud du réseau local, le troisième noeud étant différent du premier et du second noeuds, les noeuds du sous-réseau d'acheminement sont connectés les uns aux autres grâce à une structure maillée en forme d'arbre, le premier noeud servant de relais entre au moins un noeud de niveau hiérarchique supérieur dans l'arbre et au moins un noeud de niveau hiérarchique inférieur dans l'arbre et le troisième noeud n'est pas un noeud de niveau hiérarchique inférieur pour lequel le premier noeud sert de relais,
- établissement (E321) d'une seconde interconnexion entre le premier et le troisième noeuds par une liaison radio dans une seconde bande de fréquence différente de la première bande de fréquence,
- suppression (E323) de la première interconnexion lorsque la seconde interconnexion est établie.

2. Procédé selon la revendication 1, **caractérisé en ce que** les noeuds du sous-réseau d'acheminement sont connectés les uns aux autres grâce à une structure maillée et le procédé comporte en outre les étapes de :
- vérification si l'établissement de la seconde interconnexion crée deux chemins pour le transfert de données entre deux noeuds du réseau maillé, et dans l'affirmative
- interruption du transfert de données entre les deux noeuds du réseau maillé sur un des deux chemins.

3. Procédé selon la revendication 1, **caractérisé en ce que** le procédé comporte en outre les étapes de :
- sélection d'un quatrième noeud du réseau local, le quatrième noeud étant différent du second noeud,
- établissement, lorsque la première interconnexion est supprimée, d'une troisième interconnexion entre le premier et le quatrième noeuds par une liaison radio dans la première bande de fréquence.

4. Procédé selon la revendication 3, **caractérisé en ce que** le procédé comporte en outre l'étape de suppression de la seconde interconnexion lorsque la troisième interconnexion est établie.

5. Procédé selon la revendication 3 ou 4, **caractérisé en ce que** les noeuds du sous-réseau d'acheminement sont connectés les uns aux autres grâce à une structure maillée en forme d'arbre, le troisième noeud servant de relais entre au moins un noeud de niveau hiérarchique supérieur dans l'arbre et au moins un noeud de niveau hiérarchique inférieur dans l'arbre et le quatrième noeud n'est pas un noeud de niveau hiérarchique inférieur pour lequel le troisième noeud sert de relai.

6. Procédé selon l'une quelconque des revendication 1 à 5, **caractérisé en ce que** les noeuds du sous-réseau d'acheminement sont connectés les uns aux autres grâce à une structure maillée et le procédé comporte en outre les étapes de :
- vérification si l'établissement de la troisième interconnexion crée deux chemins pour le transfert de données entre deux noeuds du réseau maillé, et dans l'affirmative
- interruption du transfert de données entre les deux noeuds du réseau maillé sur un des deux chemins.

7. Dispositif de reconfiguration d'une première interconnexion d'un premier noeud avec un second noeud d'un sous réseau d'acheminement dans un réseau local comprenant une pluralité de noeuds permettant une extension de couverture de communication sans-fil afin d'augmenter la portée du réseau local en coordonnant plusieurs points d'accès intégrés aux noeuds, les premier et second noeuds étant interconnectés par une liaison radio dans une première bande de fréquence, **caractérisé en ce que** le dispositif est compris dans un noeud dit contrôleur, et comporte :
- des moyens de sélection d'un troisième noeud du réseau local, le troisième noeud étant différent du premier et du second noeuds, les noeuds du sous-réseau d'acheminement sont connectés les uns aux autres grâce à une structure maillée en forme d'arbre, le premier noeud servant de relais entre au moins un noeud de niveau hiérarchique supérieur dans l'arbre et au moins un noeud de niveau hiérarchique inférieur dans l'arbre et le troisième noeud n'est pas un noeud de niveau hiérarchique inférieur pour lequel le premier noeud sert de relais,
- des moyens d'établissement d'une seconde interconnexion entre le premier et le troisième noeuds par une liaison radio dans une seconde bande de fréquence différente de la première bande de fréquence,
- des moyens de suppression de la première interconnexion lorsque la seconde interconnexion est établie.

8. Un produit programme d'ordinateur **caractérisé en ce qu'**il comprend des instructions pour implémenter, par un équipement, le procédé selon l'une quelconque des revendications 1 à 6, lorsque ledit programme est exécuté par un processeur de l'équipement.

9. Un support de stockage **caractérisé en ce qu'**il stocke un programme d'ordinateur comprenant des instructions pour implémenter, par un équipement, le procédé selon l'une quelconque des revendications 1 à 6, lorsque ledit programme est exécuté par un processeur de l'équipement.
